# EUROPEAN PATENT APPLICATION

(11) **EP 2 631 611 A1**
(43) Date of publication of application: **28.08.2013**
(21) Application number: 12156780.4
(22) Date of filing: 24.02.2012
(51) Int. Cl.: G01F 23/284

(54) **Arrangement for measuring a level of a surface of a filling product**

(71) Applicant: Siemens Aktiengesellschaft, 80333 München (DE)
(72) Inventor: Lyon, George Quinton, Peterborough, K9K 1T9 (CA)

(57) **Abstract**

An arrangement for measuring a level of a surface (4) of a filling product (5) in a receptacle (6) comprises a radar level transmitter (1) arranged remote from a measuring location above the filling product (5) and having an antenna (2) for directed sending and receiving of microwaves (3) and a microwave redirection means (7) for transmitting onto the surface (4) of the filling product (5) microwaves (3) sent from said antenna (2) and transmitting back to said antenna (2) microwaves reflected from the surface (4) of the filling product (5).

To reduce installation and adjustment efforts, the microwave redirection means (7) has a first antenna (8) arranged at the measuring location above the filling product (5), a second antenna (9) directed to the antenna (2) of the radar level transmitter (1) and a short distance waveguide (10) between the first antenna (8) and the second antenna (9).

## Description

The present invention relates to an arrangement for measuring a level of a surface of a filling product in a receptacle, which arrangement comprises
- a radar level transmitter arranged remote from a measuring location above the filling product and having an antenna for directed sending and receiving of microwaves and
- a microwave redirection means for transmitting onto the surface of the filling product microwaves sent from said antenna and transmitting back to said antenna microwaves reflected from the surface of the filling product.

There are a number of applications in which a radar level transmitter, or its antenna, cannot be properly, or at all, installed directly above the filling product. For example a wall or obstruction may hinder or prevent access to the natural measuring location above the filling product, or heat emanating from the filling product may harm or destroy the level transmitter, especially its electronic components.

It is therefore known from US 2010/0000314 A1 to arrange the radar level transmitter remote from the measuring location above the filling product and provide a microwave redirection means in the form of at least one plane or concave mirror to reflect microwaves sent from the antenna of the radar level transmitter to the surface of the filling product and redirect microwaves reflected from the surface of the filling product to the antenna of the level transmitter.

This, however, requires precise alignment and distance adjustment of the mirror and the level transmitter.

It is therefore an object of the invention to provide level measurement with a radar level transmitter arranged remote from the measuring location and a minimum of mounting and adjustment efforts.

According to the invention this is achieved by the arrangement of the initially mentioned type wherein said microwave redirection means has a first antenna arranged at the measuring location above the filling product, a second antenna directed to the antenna of the radar level transmitter and a short distance waveguide between the first antenna and the second antenna.

The microwave redirection means thus uses two antennae connected by a waveguide. By aiming one antenna at the radar level transmitter and the other at the surface to be measured, the level transmitter is easily able to detect the surface. The antennae can each be aligned independently to the surface to be measured and the radar level transmitter, respectively. The distance between the second antenna of the microwave redirection means and the radar level transmitter plays no or almost no role.

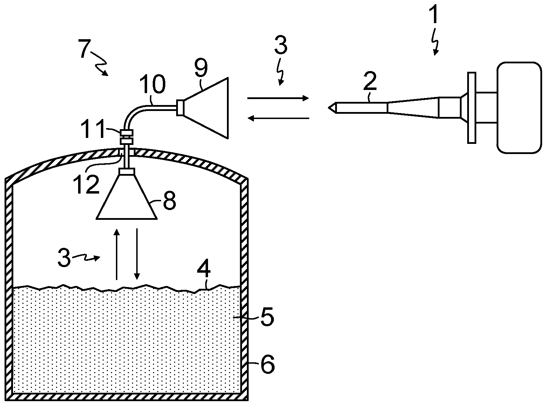

It is conceivable to directly couple the waveguide to the radar level transmitter, however, at high frequencies in the GHz range, the diameter of the waveguide becomes very small and tolerances are high in this case, which makes it impractical for more than a short distance. Also, at such high frequencies the coaxial cable becomes expensive and losses are high. The advantage of not directly coupling to the antenna is that one can use a standard radar level transmitter and it is not necessary to run an expensive and easily damaged coaxial cable. It also has no effect on approvals because the level transmitter is not changed in any way. The arrangement according to the invention keeps the waveguide short and therefore practical to construct or protect, even at high frequencies in the GHz or two-digit GHz range, e.g. 26 GHz. The invention will be now described with reference to the single Figure which schematically shows an embodiment of the arrangement according to the invention.

The Figure shows a radar level transmitter 1 with an antenna 2, which is here a rod antenna but also might be a horn (or cone) antenna. Such a level transmitter 1 determines a level or distance to be measured from the travel time of microwaves 3 which are transmitted and then received as echoes. Pulse radar and frequency modulation continuous wave radar (FMCW radar) are the most widely known methods for determining the travel time.

The radar level transmitter 1, which is usually pointed at the surface 4 of a filling product 5 in a receptacle 6 (vessel, tank, open channel, conveyor belt), is now aimed at a microwave redirection means 7 which consists of a first antenna 8 arranged at a measuring location above the filling product 5, a second antenna 9 directed to the antenna 2 of the radar level transmitter 1 and a short distance waveguide 10 between the first antenna 8 and the second antenna 9.

In the shown example the antenna 2 of the radar level transmitter 1 is a horn antenna and the antennae 8, 9 of the microwave redirection means 7 are horn antennae. Each of the antennae 2, 8, 9 can be of the respective other type, with the exception that the antennae 2 and 9, which are directed towards each other, are not both rods. Furthermore, any antenna may be used which is capable of directionally transmitting and receiving the microwaves 3, e.g. patch antenna, lens/horn combination, slot antenna, yagi antenna, or an antenna array.

The short distance waveguide 10 may be a bent or flexible hollow waveguide or coaxial cable. In the shown example, the waveguide 10 has two sections, each coupled at one end to the respective antennae 8, 9 and at the other end to each other by means of a coupler 11. This gives a greater freedom in installing the microwave redirection means 7 and, for example, allows an access hole 12 in a cover of the receptacle 6 to be made very small, just large enough for the coupler 11. Coupling of a hollow waveguide or coaxial cable to a microwave antenna is well known and need not be described in detail.

The microwaves 3 emitted by the level transmitter 1 are captured by antenna 9 and transferred to antenna 10 by the waveguide 10 where they are emitted at the surface 4 of the filling product 5. The reflected microwaves are then captured by antenna 8, carried to antenna 9 by the waveguide 10 and emitted in the direction of the level transmitter 1 where they are detected. If the microwaves 3 emitted from the level transmitter 1 are polarized in some manner then the microwave redirection means 7 must support this polarization. This is especially true for antenna 9 which must allow capture and retransmission of the polarized microwaves from and to the level transmitter 1. It should either have no polarization effect or be of the same polarization as the level transmitter 1.

## Claims

1. An arrangement for measuring a level of a surface (4) of a filling product (5) in a receptacle (6), comprising:
a radar level transmitter (1) arranged remote from a measuring location above the filling product (5) and having an antenna (2) for directed sending and receiving of microwaves (3) and a microwave redirection means (7) for transmitting onto the surface (4) of the filling product (5) microwaves (3) sent from said antenna (2) and transmitting back to said antenna (2) microwaves reflected from the surface (4) of the filling product (5), wherein
said microwave redirection means (7) has a first antenna (8) arranged at the measuring location above the filling product (5), a second antenna (9) directed to the antenna (2) of the radar level transmitter (1) and a short distance waveguide (10) between the first antenna (8) and the second antenna (9) .

2. The arrangement of claim 1, wherein the waveguide (10) comprises a hollow waveguide.

3. The arrangement of claim 1, wherein the waveguide (10) comprises a coaxial cable.

4. The arrangement of any of the preceding claims, wherein the first antenna (8) of the microwave redirection means (7) is either a horn antenna or a rod antenna.

5. The arrangement of any of the preceding claims, wherein the second antenna (9) of the microwave redirection means (7) is either a horn antenna or a rod antenna.

6. The arrangement of any of the preceding claims, wherein the frequency of the microwaves (3) is in the GHz range, preferably the two-digit GHz range.
